# EUROPÄISCHE PATENTANMELDUNG

(11) **EP 4 184 623 A1**
(43) Veröffentlichungstag der Anmeldung: **24.05.2023**
(21) Anmeldenummer: 22204274.9
(22) Anmeldetag: 28.10.2022
(51) Int. Cl.: H01M 8/04014, H01M 8/0612

(54) **BRENNSTOFFZELLENVORRICHTUNG MIT ERHÖHTER LEBENSDAUER**

(30) Priorität: 17.11.2021 DE 102021212908
(71) Anmelder: Robert Bosch GmbH, 70442 Stuttgart (DE)
(72) Erfinder: Horstmann, Peter, 71229 Leonberg (DE)

(57) **Zusammenfassung**

Die Erfindung betrifft eine Brennstoffzellenvorrichtung (10), umfassend einen Reformer (26), welcher dazu vorgesehen ist Brennstoff (B) für eine elektrochemische Umsetzung in einer Brennstoffzelleneinheit (12) zu reformieren, und eine Brennstoffzelleneinheit (12), welche dazu vorgesehen ist reformierten Brennstoff (RB) elektrochemisch umzusetzen. Es wird vorgeschlagen einen Wärmeübertrager (40) bezogen auf eine Zufuhr von reformiertem Brennstoff (RB) zu der Brennstoffzelleneinheit (12) stromabwärts des Reformers (26) und stromaufwärts der Brennstoffzelleneinheit (12) anzuordnen.

## Beschreibung

Die vorliegende Erfindung betrifft eine Brennstoffzellenvorrichtung, umfassend einen Reformer, welcher dazu vorgesehen ist Brennstoff für eine elektrochemische Umsetzung in einer Brennstoffzelleneinheit zu reformieren, und eine Brennstoffzelleneinheit, welche dazu vorgesehen ist reformierten Brennstoff elektrochemisch umzusetzen.

### Stand der Technik

Es sind bereits Brennstoffzellenvorrichtungen bekannt, die einen Reformer zur Reformierung von Brennstoff für eine elektrochemische Umsetzung in einer Brennstoffzelleneinheit aufweisen, wobei der Reformierungsprozess durch Abstrahlwärme einer Brennstoffzelleneinheit unterstützt wird. Dabei wird meist ein Großteil des Brennstoffs in dem Reformer reformiert. Jedoch wird in der Regel nicht der gesamte Brennstoff im Reformer reformiert. Es verbleibt meist ein kleinerer Teil des Brennstoffs, welcher anschließend in der Brennstoffzelleneinheit reformiert wird. Diese Reformierung erfolgt endotherm, wodurch die Brennstoffzelleneinheit abgekühlt wird. Dies wiederum erzeugt Temperaturunterschiede in der Brennstoffzelleneinheit, welche langfristig zu Degradationen führen können.

### Offenbarung der Erfindung

Die vorliegende Erfindung mit den Merkmalen des Hauptanspruchs zeichnet sich demgegenüber nun durch einen Wärmeübertrager aus, welcher bezogen auf eine Zufuhr von reformiertem Brennstoff zu der Brennstoffzelleneinheit stromabwärts des Reformers und stromaufwärts der Brennstoffzelleneinheit angeordnet ist. Dadurch können die vorhergehend beschriebenen Temperaturunterschiede in der Brennstoffzelleneinheit geringgehalten werden, wodurch wiederum Degradationen reduziert werden. Entsprechend wird die Lebensdauer der Brennstoffzelleneinheit und damit auch der Brennstoffzellenvorrichtung erhöht.

Durch die in den Unteransprüchen aufgeführten Merkmale sind vorteilhafte Ausführungen der Erfindung nach dem Hauptanspruch möglich. So ist es von Vorteil, wenn der Wärmeübertrager dazu vorgesehen ist Wärme von einem Abgas, insbesondere eines Nachbrenners und/oder der Brennstoffzelleneinheit, auf den reformierten Brennstoff zu übertragen. Dadurch wird eine besonders gute Wärmeübertragung ermöglicht, wodurch die vorhergehend beschriebenen Temperaturunterschiede in der Brennstoffzelleneinheit besonders effektiv geringgehalten und dazu korrespondierende Degradationen effizient reduziert werden können. Entsprechend kann die Lebensdauer der Brennstoffzelleneinheit und damit auch der Brennstoffzellenvorrichtung besonders stark erhöht werden.

Besonders vorteilhaft ist es, wenn der Wärmeübertrager bezogen auf eine Abfuhr eines Abgases von einem Nachbrenner stromabwärts des Nachbrenners angeordnet ist. Dadurch wird eine vorteilhafte Realisierung der vorhergehend beschriebenen Wärmeüberragung ermöglicht.

Auch ist es besonders vorteilhaft, wenn der Wärmeübertrager bezogen auf eine Abfuhr eines Abgases von einem Nachbrenner stromaufwärts des Nachbrenners und/oder bezogen auf eine Abfuhr eines Abgases von der Brennstoffzelleneinheit stromabwärts angeordnet ist. Dadurch wird ebenfalls eine vorteilhafte Realisierung der vorhergehend beschriebenen Wärmeüberragung ermöglicht.

### Zeichnungen

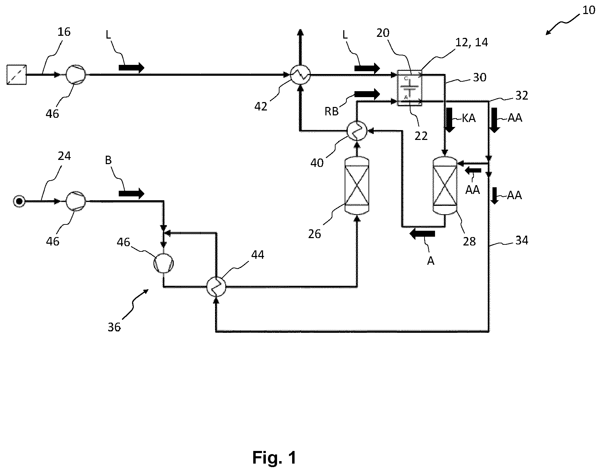

In den Zeichnungen ist ein Ausführungsbeispiel der Erfindung schematisch dargestellt und in der nachfolgenden Beschreibung näher erläutert. Es zeigt
- Fig. 1: ein schematisches Schaltbild eines Ausführungsbeispiels einer Brennstoffzellenvorrichtung.

### Beschreibung der Ausführungsbeispiele

In Fig. 1 ist ein schematisches Schaltbild eines Ausführungsbeispiels einer Brennstoffzellenvorrichtung 10 gezeigt. Die Brennstoffzellenvorrichtung 10 umfasst eine Brennstoffzelleneinheit 12, im vorliegenden Fall einen Brennstoffzellenstack 14. Die Brennstoffzelleneinheit 12, bzw. der Brennstoffzellenstack 14, weist eine Vielzahl von Brennstoffzellen, im vorliegenden Fall Festoxidbrennstoffzellen (englisch: solid oxide fuel cell, SOFC), auf.

Über eine Luftzuführung 16 wird, beispielsweise in einem Normalbetrieb der Brennstoffzellenvorrichtung 10, einem Kathodenraum 20 der Brennstoffzelleneinheit 12 sauerstoffhaltige Luft L zugeführt, während einem Anodenraum 22 der Brennstoffzelleneinheit 12 reformierter Brennstoff RB, im vorliegenden Wasserstoff, zugeführt wird. In der Brennstoffzelleneinheit 12 wird der reformierte Brennstoff RB durch Mitwirkung von Sauerstoff aus der Luft L unter Erzeugung von Strom und Wärme elektrochemisch umgesetzt.

Der reformierte Brennstoff RB wird erzeugt, indem der Brennstoffzellenvorrichtung 10 über eine Brennstoffzuführung 24 Brennstoff B, im vorliegenden Fall Erdgas, zugeführt wird, welcher anschließend in einem Reformer 26 reformiert wird. Eine solche Reformierung erfolgt endotherm.

Stromabwärts ist die Brennstoffzelleneinheit 12 mit einem Nachbrenner 28 verbunden. Dem Nachbrenner 28 wird Abgas der Brennstoffzelleneinheit 12 zugeführt, im vorliegenden Fall Kathodenabgas KA über eine Kathodenabgasführung 30 und ein Teil des Anodenabgas AA über eine Anodenabgasführung 32. Das Kathodenabgas KA enthält unverbrauchte Luft L, bzw. unverbrauchten Sauerstoff, während das Anodenabgas AA ggf. nicht-umgesetzten, reformierten Brennstoff RB und/oder ggf. nicht-reformierten Brennstoff B enthält. Mittels des Nachbrenners 28 wird das Anodenabgas AA, bzw. der ggf. darin enthaltene nicht-umgesetzte, reformierte Brennstoff RB und/oder der ggf. darin enthaltende nicht-reformierte Brennstoff B, unter Beimischung des Kathodenabgases KA, bzw. des darin enthaltenen Sauerstoffs der Luft L, verbrannt, wodurch zusätzliche Wärme erzeugt werden kann.

Des Weiteren weist die Brennstoffzellenvorrichtung 10 eine Rückführung 34 auf, mittels welcher ein Teil des Anodenabgas AA aus der Anodenabgasleitung 32 abgezweigt und einem Anodenrezirkulationskreis 36 zugeführt werden kann.

Mittels des Anodenrezirkulationskreises 36 kann der abgezweigte Teil des Anodenabgas AA dem Anodenraum 22 der Brennstoffzelleneinheit 12 und/oder dem Reformer 26 rückgeführt, bzw. erneut zugeführt werden, so dass der ggf. im abgezweigten Anodenabgas AA enthaltene, nicht-umgesetzte, reformierte Brennstoff RB im Nachgang in der Brennstoffzelleneinheit 12 umgesetzt und/oder der ggf. im abgezweigten Anodenabgas AA enthaltene, nicht-reformierte Brennstoff B im Nachgang im Reformer 26 reformiert werden kann. Dadurch kann der Wirkungsgrad der Brennstoffzellenvorrichtung 10 weiter erhöht werden. Zudem kann über die Brennstoffzuführleitung 24 frischer Brennstoff B dem im Anodenrezirkulationskreis 36 rezirkuliertem, abgezweigten Anodenabgas AA beigemischt werden.

Es kann vorkommen, dass nicht immer der gesamte Brennstoff B im Reformer 26 reformiert wird. So kann ein kleinerer Teil des Brennstoffs B verbleiben, welcher anschließend auch in der Brennstoffzelleneinheit 12 reformiert werden kann. Da eine solche Reformierung endotherm erfolgt, kann es zu einer Abkühlung in Brennstoffzelleneinheit 21 kommen. Dies wiederum erzeugt Temperaturunterschiede in der Brennstoffzelleneinheit 12, welche langfristig zu Degradationen führen können.

Die vorliegende Brennstoffzellenvorrichtung weist nun einen Wärmeübertrager 40 auf, welcher bezogen auf eine Zufuhr von reformiertem Brennstoff RB zu der Brennstoffzelleneinheit 12 stromabwärts des Reformers 26 und stromaufwärts der Brennstoffzelleneinheit 12 angeordnet ist. Dadurch können die vorhergehend beschriebenen Temperaturunterschiede in der Brennstoffzelleneinheit 12 geringgehalten werden, wodurch wiederum Degradationen reduziert werden. Entsprechend wird die Lebensdauer der Brennstoffzelleneinheit 12 und damit auch der Brennstoffzellenvorrichtung 10 erhöht.

Der Wärmeübertrager 40 ist dazu vorgesehen Wärme von einem Abgas A des Nachbrenners 28 auf den reformierten Brennstoff RB stromaufwärts der Brennstoffzelleneinheit 12 zu übertragen. So kann die Wärme besonders gut zur Brennstoffzelleneinheit 12 geführt werden, wodurch wiederum die vorhergehend beschriebenen Temperaturunterschiede in der Brennstoffzelleneinheit besonders effektiv geringgehalten und dazu korrespondierende Degradationen effizient reduziert werden können.

Im gezeigten Fall ist der Wärmeübertrager 40 bezogen auf die Abfuhr des Abgases A von dem Nachbrenner 28 stromabwärts des Nachbrenners 28 angeordnet. So wird das bei der Verbrennung im Nachbrenner 28 entstehende heiße Abgas A mittels einer Abgasführung 34 über den Wärmeübertrager 40 vom Nachbrenner 28 abgeführt. Der Wärmeübertrager 40 ist dabei wiederum mit dem Reformer 26 strömungstechnisch verbunden, so dass Wärme von dem heißen Abgas A auf den vom Reformer 26 abgeführten, reformierten Brennstoff RB übertragen wird. Entsprechend kann die Wärme des heißen Abgases A für die Reformierung eines im Reformer 26 ggf. nicht-reformierten Brennstoffs B in der Brennstoffzelleneinheit 12 genutzt werden. In dem gezeigten Ausführungsbeispiel handelt es sich bei dem Wärmeübertrager 40 um einen ersten Wärmeübertrager 40.

Des Weiteren weist die Brennstoffzellenvorrichtung 10 einen zweiten Wärmeübertrager 42 auf, mittels welchem die zugeführte Luft L vorgewärmt wird. Dabei ist der zweite Wärmeübertrager 42 bezogen auf die Zufuhr von Luft L in der Luftzuführung 16 stromaufwärts der Brennstoffzelleneinheit 12 und bezogen auf die Abfuhr des Abgases A stromabwärts des ersten Wärmeübertragers 40 angeordnet. So wird nach passieren des ersten Wärmeübertragers 40 die im Abgas A verbleibende Restwärme auf die in der Luftzuführung 16 strömende Luft L übertragen.

Darüber hinaus weist die Brennstoffzellenvorrichtung einen dritten Wärmeübertrager 44 auf, welcher im Anodenrezirkulationskreises 40 angeordnet ist. Mittels des dritten Wärmeübertrages 44 wird zur thermischen Aufbereitung von frisch zugeführtem Brennstoff B Wärme von dem abgezweigten Anodenabgas AA aus der Rückführleitung 34 auf das durch die Beimischung des frischen Brennstoffs B entstehende Brennstoffgemisch im Anodenrezirkulationskreis 36 übertragen.

Über Verdichter 46 in den jeweiligen Leitungen, kann die Zufuhr von Luft L in der Luftzuführung 16, die Zufuhr von Brennstoff B in der Brennstoffzuführung 24 und die Rezirkulationsrate des Anodenabgases AA im Anodenrezirkulationskreis 36 geregelt und/oder aufeinander abgestimmt werden.

In einem alternativen Ausführungsbeispiel, welches bildlich nicht näher dargestellt ist, wäre es auch möglich, dass der Wärmeübertrager 40 bezogen auf eine Abfuhr des Abgases A von dem Nachbrenner 28 stromaufwärts des Nachbrenners 28 und/oder bezogen auf eine Abfuhr von Kathodenabgas KA von der Brennstoffzelleneinheit 12 stromabwärts der Brennstoffzelleneinheit 12 angeordnet ist. So könnte das Kathodenabgas KA mittels der Kathodenabgasführung 34 von der Brennstoffzelleneinheit 12 über den Wärmeübertrager 40 zum Nachbrenner 28 geführt werden. Der Wärmeübertrager 40 könnte dabei wiederum mit dem Reformer 26 strömungstechnisch verbunden sein, so dass Wärme von dem Kathodenabgas KA auf den vom Reformer 26 abgeführten, reformierten Brennstoff RB übertragen werden könnte. Entsprechend könnte die Wärme des Kathodenabgases KA für die Reformierung eines im Reformer 26 ggf. nicht-reformierten Brennstoffs B in der Brennstoffzelleneinheit 12 genutzt werden.

## Patentansprüche

1. Brennstoffzellenvorrichtung (10), umfassend einen Reformer (26), welcher dazu vorgesehen ist Brennstoff (B) für eine elektrochemische Umsetzung in einer Brennstoffzelleneinheit (12) zu reformieren, und eine Brennstoffzelleneinheit (12), welche dazu vorgesehen ist reformierten Brennstoff (RB) elektrochemisch umzusetzen, **gekennzeichnet durch** einen Wärmeübertrager (40), welcher bezogen auf eine Zufuhr von reformiertem Brennstoff (RB) zu der Brennstoffzelleneinheit (12) stromabwärts des Reformers (26) und stromaufwärts der Brennstoffzelleneinheit (12) angeordnet ist.

2. Brennstoffzellenvorrichtung (10) nach Anspruch 1, **dadurch gekennzeichnet, dass** der Wärmeübertrager (40) dazu vorgesehen ist Wärme von einem Abgas (KA, A), insbesondere eines Nachbrenners (28) und/oder der Brennstoffzelleneinheit (12), auf den reformierten Brennstoff (RB) zu übertragen.

3. Brennstoffzellenvorrichtung (10) nach Anspruch 2, **dadurch gekennzeichnet, dass** der Wärmeübertrager (40) bezogen auf eine Abfuhr eines Abgases (A) von einem Nachbrenner (28) stromabwärts des Nachbrenners (28) angeordnet ist.

4. Brennstoffzellenvorrichtung (10) nach Anspruch 2, **dadurch gekennzeichnet, dass** der Wärmeübertrager (40) bezogen auf eine Abfuhr eines Abgases (A) von einem Nachbrenner (28) stromaufwärts des Nachbrenners (28) und/oder bezogen auf eine Abfuhr eines Abgases (KA) von der Brennstoffzelleneinheit (12) stromabwärts der Brennstoffzelleneinheit (12) angeordnet ist.
